# EUROPÄISCHE PATENTANMELDUNG

(11) **EP 0 887 631 A2**
(43) Veröffentlichungstag der Anmeldung: **30.12.1998**
(21) Anmeldenummer: 98110492.0
(22) Anmeldetag: 08.06.1998
(51) Int. Cl.: G01H 1/00

(54) **Verfahren zur Ermittlung und Darstellung von Spektren für Schwingungssignale**

(30) Priorität: 26.06.1997 DE 19727114
(71) Anmelder: Prüftechnik Dieter Busch AG, 85737 Ismaning (DE)
(72) Erfinder: Franke, Dieter, 85737 Ismaning (DE); Lösl, Johann, 85591 Vaterstetten (DE); Bühler, Steffen, 86774 Unterföhring (DE)

(57) **Zusammenfassung**

Ein portables elektronisches Vibrationsmessgerät, gegebenenfalls mit Bildschirm oder zum Anschluss an einen Zentralrechner geeignet, kann eine grosse Anzahl Körperschall-Signale erfassen. Durch eine vorbestimmte oder einstellbare Abfolge mehrerer spezifischer Einzelmessungen gelingt eine signifikante Reduktion des Speicherbedarfs. Eine nachfolgende Auswertung der gespeicherten Daten und deren Darstellung sieht ein vereinheitlichtes Spektrum mit maximaler Auflösung in interessierenden Frequenzbereichen vor.

## Beschreibung

Die Erfindung betrifft ein Verfahren zur Ermittlung und Darstellung von Spektren für Schwingungssignale gemäss dem Oberbegriff des Anspruchs 1.
Ein solches Verfahren ist bekannt aus dem Buch 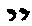 Machinery Analysis and Monitoring" des Verfassers John S. Mitchell (zweite Auflage, Pennwell Publishing Company, Tulsa, Oklahoma, ISBN 0-87814-401-3, 1993). In diesem Buch wird auf Seiten 107 bis 110 dargestellt, welche Vorteile sich aus der Verwendung von Datensammelgeräten (sogenannte Datensammler) ergeben, wenn diese zur Erfassung von Körperschall-Messgrössen eingesetzt werden. Solche Körperschall-Emissionen werden insbesondere von rotierenden und damit schwingenden Maschinen oder Maschinenteilen abgegeben. Die Überwachung von Schwingungszuständen der genannten Maschinen wird durch geeignete Signaldiagnosegeräte insgesamt stark rationalisiert und effizienter gestaltet. Dies gilt insbesondere dann, wenn die genannten Datensammler mit einer übergeordneten Daten-Auswertestation (z.B. in Form eines Personal Computers) kombinierbar sind. In diesem Falle ergeben sich gute Möglichkeiten, in einem (eventuell mehrstündigen) Arbeitsgang einer Messrunde periodisch auch eine grössere Anzahl Maschinen und deren Maschinenteile zu messen, und so dauernd auf ihren Zustand zu überwachen, und bei Bedarf eingehender zu analysieren, wenn sich sigmfikante Änderungen ergeben. Hierbei werden erfasste Messgrössen und -signale zunächst in einem Datensammler zwischengespeichert. Die Vielzahl der erfassten Messgrössen wird sodann in einen Speicher der übergeordneten Daten-Auswertestation übertragen und kann sodann mittels zugehöriger Software in relativ bequemer Weise zusammengefasst, dargestellt und ausgewertet werden.
Die genannte Vorgehensweise zielt letztlich darauf ab, Schäden an Maschinen zu vermeiden oder zumindest bereits in einem Frühstadium zu erkennen. Hierzu kann es genügen, eine Überprüfung von Maschinenschwingungen, zum Beispiel in Hinblick auf Pegelhöhe und Eigenschatten der Lagergeräusche oder der Rotorschwingungen, turnusmässig nur jede Woche oder jeden Monat durchzuführen.

Mittlerweile sind tragbare Datenerfassungsgeräte (sogenannte FFT-Datensammler) in der Lage, eine erhebliche Anzahl einzelner Messwerte und -signale zwischenzuspeichern. Es wurde dadurch die Möglichkeit eröffnet, die Überprüfung von Maschinenschwingungen mittels hoch auflösender Zeitsignaluntersuchung und Spektralanalysen durchzuführen. Hierzu wird beispielsweise für eine einzelne Maschinenüberprüfung ein Datensatz von ca. 10 000 bis 20 000 Einzel-Abtastwerten des Schwingungssignales zunächst zwischengespeichert und in einem zweiten Schritt einer sogenannten Fouriertransformation zugeführt. Das Ergebnis der Fouriertransformation kann dann auf einem Bildschirm oder einem Sichtgerät in an sich bekannter Weise dargestellt werden.
Entsprechend einem zu diagnostizierenden Bauteil werden derzeit an einer Messstelle nacheinander mehrere Signale jeweils mit verschiedenen Messeinstellungen zur gesamten Zustandsuntersuchung gemessen. Dafür muss für ein einzeln zu untersuchendes Bauteil das Schwingungssignal mit der entsprechend nötigen Frequenzauflösung in dem Frequenzbereich analysiert werden, in dem die Schwingungen des Bauteils auftreten. Die verschiedenen Bauteile und Baugruppen führen wie bekannt mit zunehmender Grösse jeweils niederfrequentere Schwingungen aus, die bei niederen Frequenzen für eine gute Signaldynamik und Rauschabstand als Schwinggeschwindigkeit oder als Schwingweg gemessen werden. Für niedrigere Frequenzen ist eine um so feinere Frequenzauflösung der einzelnen Schmalbandlinien erforderlich, um einzelne Schwingungskomponenten unterscheiden zu können. Beispielsweise sind die Messeinstellungen für Schwingungssignale grosser langsamer Rotoren so zu gestalten, dass der Schwingweg in einem Frequenzbereich von 2 bis 400 Hz mit ca. 0,1 Hz Auflösung, also 3200 Linien, analysiert wird. Die Schwingungssignale kleiner Bauteile wie Wälzlager hingegen werden mit der Schwingbeschleunigung in einem Frequenzbereich von 1 kHz bis 40 kHz mit 3200 Linien mit je 12,5 Hz Auflösung ausreichend genau analysiert. Wird nun versucht, zur Vereinfachung für alle Bauteile nur ein Schwingungssignal zu analysieren, bis zu einer hohen Frequenz, so ist für die Rotoren selbst bei noch höheren Linienanzahlen die Auflösung nicht ausreichend.
Zur Erfassung der Frequenzspektren der Schwingungssignale werden bekannterweise an einer gewählten Messposition Schwingbeschleunigungsaufnehmer eingesetzt, die das Schwingungssignal liefern, das im Messgerät verstärkt und im Frequenzbereich hardwaremässig gefiltert wird. Danach erfolgt eine A/D-Wandlung des Signales mit der Abtastung mit einer Abtastfrequenz die bekannterweise das ca. zweifache der zu untersuchenden obersten Grenzfrequenz des Frequnzspektrums sein muss, um aus dem digitalen Zeitsignal richtig ein Frequenzspektrum mittels einer FFT oder anderen Transformation berechnen zu können. Für die Anzahl der Abtastungen muss eine entspechend grosse Zahl vorgesehen werden, um im Frequenzbereich eine erforderliche Frequenzauflösung der einzelnen Schmalbandlinien zu erhalten. Für Maschinen - Schwingungssignale werden Frequenz-Bänder mit konstanter Absolutbandbreite verwendet.
Vom nun erhaltenen gemessene Frequenzbereich kann für eine günstige Darstellung ein Ausschnitt eines dargestellten Frequenzbereiches abgebildet werden. Sollen viele Maschinen an mehreren Messpositionen in einer Messrunde oder über einen langen Zeitraum mehrfach untersucht werden, so ist entsprechend viel Speicherplatz vorzusehen. Es versteht sich, dass ein grösserer Speicher in nachteiliger Weise ein grösseres Bauvolumen und höhere Kosten eines Signaldiagnosegeräts verursacht. Ebenso wie Datensammler werden sogenannte Analysatoren in ähnlicher Weise verwendet, wobei hier keine periodische Überwachung durchgeführt wird, sondern nur bei Bedarf eine tiefer gehende Ursachenanalyse bei veränderten Schwingungszuständen durchgeführt wird. Die Aufgabe des Datensammlers kann auch an beispielsweise sehr wichtigen oder nicht zugänglichen Maschinen ein festinstalliertes Überwachungsgerät mit einer Dauerüberwachung in gleicher Weise erfüllen. Allerdings werden dann dauernd Messgrössen oder -signale erfasst und bei Bedarf über eine ebenso fest installierte längere Datenleitung an der Auswertestation weiter verarbeitet, endgespeichert, ausgewertet und sichtbar gemacht. Die FFT-Datensammler, Analysatoren und festinstallierte Überwachungsgeräte werden in der Folge auch als Signaldiagnosegeräte bezeichnet.

Dementsprechend ist es eine Aufgabe der Erfindung, einen Datensammler, Analysator oder Überwachungsgerät bereitzustellen, welches für eine Spektralanalyse von Maschinenschwingungen mit partiell möglichst hoher Auflösung entsprechend dem Informationsgehalt der Signale verwendbar ist, andererseits mit einem Minimum an erforderlichem Speicherplatz für die Zwischenspeichetung von Messdaten auskommt und keine digitale Filter mit digitalem Signalprozessor erfordert. Diese Aufgabe wird dadurch gelöst, dass gemäss der Erfindung ein Verfahren angewendet wird, bei welchem - in Kombination - folgende Schritte ausgeführt werden:
In einem ersten Schritt wird eine Anzahl an Schwingungssignalen mit Abtastwerten einzeln oder in paralleler Weise als Datensatz erfasst und gespeichert, wobei diese Schwingungssignale mit einer ersten Abtastfrequenz aufgenommen werden, so dass für den breitbandigsten zu untersuchenden Frequenzbereich eine zugeordnete erforderliche Auflösung erzielt wird.
In einem zweiten Schritt wird eine zweite Anzahl Schwingungssignalen mit Abtastwerten einzeln oder in paralleler Weise als Datensatz erfasst, verarbeitet und gespeichert, wobei diese Schwingungssignale aber mit einer zweiten Abtastfrequenz aufgenommen werden, die vorzugsweise ein ganzzahliger Bruchteil der ersten Abtastfrequenz ist, und soweit von der ersten Abtastfrequenz verschieden ist, dass für einen niedrigeren zu untersuchenden Frequenzbereich eine zugeordnete erforderliche Auflösung erzielt wird.
In einem oder mehreren weiteren Schritten wird jeweils wiederum eine Anzahl Schwingungssignalen mit Abtastwerten einzeln oder in paralleler Weise als Datensatz erfasst, verarbeitet und gespeichert, wobei auch diese Schwingungssignale aber mit einer weiteren Abtastfrequenz aufgenommen werden, die vorzugsweise ein ganzzahliger Bruchteil der zweiten Abtasftrequenz ist, und soweit von der zweiten Abtastfrequenz verschieden ist, dass für einen niedrigsten, oder niedrigeren zu untersuchenden Frequenzbereich eine zugeordnete erforderliche Auflösung erzielt wird. Diese Schritte können auch in anderer Reihenfolge ausgeführt werden, müssen jedoch in gleicher Weise zueinander gestaffelt durchgeführt werden.
In einer abschliessenden, beliebig zeitversetzten weiteren Schrittfolge werden die gespeicherten Messsignale analysiert und kombiniert, so dass das Ergebnis der Analyse über ein Sichtteil oder einen Drucker selektiv oder vollumfänglich darstellbar ist. Wichtig ist dabei die Ausführung aller genannten Schritte unmittelbar nacheinander oder in vordefinierter Abfolge, damit die verschiedenen Schwingungserscheinungen und deren Ursachen in Korrelation gebracht werden können.

Dieses Verfahren wird beispielsweise durch die Benutzung eines erfindungsgemässen zugehörigen Gerätes, speziell in Form eines Signaldiagnosegeräts, ausgeführt. Verfahren und Gerät bieten den Vorteil, dass Körperschalluntersuchungen an Maschinen und Maschinenteilen in verschiedenen interessierenden Frequenzbereichen mit optimaler und partiell mit hoher und höchster Auflösung durchgeführt werden können, wahrend der Aufwand und Raumbedarf für einen erforderlichen Speicher, insbesondere einen Zwischenspeicher, im Vergleich zu bekannten Lösungen erheblich verringert wird.

Weitere vorteilhafte Ausgestaltungen der Erfindung werden wie folgt angegeben:
Das oben angegebene Verfahren verhindert Probleme bei der Interpretation der Messergebnisse dadurch, dass die Frequenzdarstellung ermittelter Teil- oder Einzelspektren in einem rechtwinkligen Koordinatensystem erfolgt, wobei die Abszisse des Koordinatensystems in mehrere Einzelabschnitte mit gleichartiger, insbesondere linearer, oder gegebenenfalls auch logarithmischer, Teilung unterteilt ist, und wobei die Einzelabschnitte unterschiedliche Skalenendwerte und jeweils optimale Frequenzauflösungen aufweisen. Die Ordinaten jedes Einzelabschnitts repräsentieren dabei jeweils spektrale Intensitäten, die aus jeweils zugehörigen Messsignalen abgeleitet sind, welche aus einem vordefinierten, bandbegrenzten, mithin durch eine obere Abtastfrequenz bestimmten Frequenzbereich entstammen oder einem solchen zugeordnet werden können.

Weiterhin wird das erfindungsgemässe Verfahren mit Vorteil so ausgestaltet, dass die Frequenzbereiche für mehrere darzustellende Spektralbereiche derart angeordnet und so nach Grösse gestaffelt sind, dass mehrere Einzelspektren superponiert dargestellt werden können. Zu diesem Zweck ist es vorteilhalt, dass der spektrale Informationsgehalt für die genannten Frequenzbereiche in einer zusammengefassten und kombinierten Form speicherbar, übertragbar und darstellbar ist.

Es ist von Vorteil, wenn gemäss dem erfindungsgemässen Verfahren überlappende Spektralbereiche ausgeblendet oder weggelassen werden können und somit nicht mehrfach zur Darstellung auf einem Sichtgerät gelangen oder als sogenannte Hardcopy ausgedruckt werden und die Datenmenge auch in einem gemeinsamen Datensatz somit reduziert werden kann.

In einer bevorzugten Ausgestaltung des erfindungsgemässen Verfahrens wird mittels eines einzigen Mess-Befehls, der vorher definierte Messeinstellungen oder Mess-Parameter enthält, eine vorgegebene Anzahl an Abtastwerten ermittelt, damit die genannten Einzelspektren errechnet werden können und darüber hinaus gemeinschaftlich über einen einzigen Darstellungs-Befehl, der vorher definierte Darstellungseinstellungen enthält, kombiniert darstellbar sind. Mit Vorteil wird hierzu in einem vorher auszuführenden Schritt sowohl für einen höchstfrequenten als auch für einen mittelfrequenten Einzelspektralbereich eine zugehörige obere Grenzfrequenz und Auflösung mittels einer Tastatur oder mittels einer Cursorfünktion auf einer grafischen Oberfläche vorgegeben.

Weiterhin besteht gemäss der Erfindung eine spektrale Gesamtdarstellung bevorzugt aus den Auswertungsergebnissen für drei einzelne Spektralbereiche, wobei die oberen Grenzfrequenzen der Spektralbereiche im Verhältnis 1:10:100 stehen und bevorzugt die Frequenzbereiche zwischen 0-400, 400-4000 und 4000 bis 40000 Hz umfassen, die bei gleicher Linienanhhl pro Bereich jeweils eine um den Faktor 10 bessere Frequenzauflösung ermöglicht.

Das erfindungsgemässe Verfahren kann bei der Abtastung der Messignale zur Berechnung einzelner fouriertransformierten Spektren eine strikt sukzessive Vorgehensweise vorsehen oder die erforderlichen Messignale, für jeweils einen zugeordneten Frequenzbereich, zumindest fast gleichzeitig erstellen. Dieses Vorgehensweise kann auch gemäss der Erfindung mehrfach nacheinander wiederholt werden, so dass die Berechnung einer Mehrzahl von fouriertransformierten Spektren (oder Sätzen von Spektren) mit gleicher Bandbreite ermöglicht wird und diese Mehrzahl an Spektren in einer gemittelten Spektrum zusammengefasst wird und gespeichert werden kann, so dass eine Auswertung anhand der Mittelwerte, Streuungen und anderer statistischer Kenngrössen möglich ist. Je nach Mittelungsart können dadurch interessierende Signalkomponenten hervorgehoben werden. In diesem Zusammenhang ist es gemäss der Erfindung auch möglich, dass die zeitliche Reihenfolge der Abtastung von einkanalig oder mehrkanalig zu erfassenden Schwingungssignalen zwecks Berechnung und Darstellung einzelner fouriertransformierter Spektral-Teile nach einem vorgegebenen Muster erfolgt, wobei ein solches Muster eine Reihenfolge oder eine Häufigkeitsverteilung von direkt nacheinander auszumessenden Teil-Frequenzbereichen vorgibt. Diese Muster können dabei durch einen Bediener einer Apparatur, welche gemäss dem Verfahren der Erfindung arbeitet, in einem vorhergehenden Arbeitsschritt ausgewählt oder frei bestimmt werden.

Das erfindungsgemässe Verfahren kann mit besonderem Vorteil so ausgestaltet werden, dass nur Spektralbereiche mit genügend grossen Signal-Intensitäten oder genügend grossem Signal-Rauschabständen zur Darstellung gelangen, und dafür die Amplitudenwerte ggf. umgerechnet werden. Diese Spektral- oder Frequenz-Bereiche werden in automatischer Weise errechnet und mittels einer automatisch durchgeführten Skalierung zur Darstellung gebracht.

Ein bevorzugtes Ausführungsbeispiel der Erfindung wird im folgenden anhand der Zeichnungen beschrieben. - Es zeigt
- Fig. 1: ein Körperschallspektrum, dargestellt für einen Frequenzbereich von 0 bis 40 kHz, gemäss dem Stand der Technik
- Fig. 2a: eine apparative Anordnung, wie sie bei dem erfindungsgemässen Verfahren eingesetzt wird
- Fig. 2b: einen zeitlichen Ablauf für die Ermittlung von Messwerten, in symbolischer Darstellung
- Fig. 3: eine kombinierte Darstellung einzelner Körperschall-Spektren
- Fig. 4: eine zusammenhängende Darstellung eines differenziert-auflösenden Körperschall-Spektrums nach dem Stand der Technik

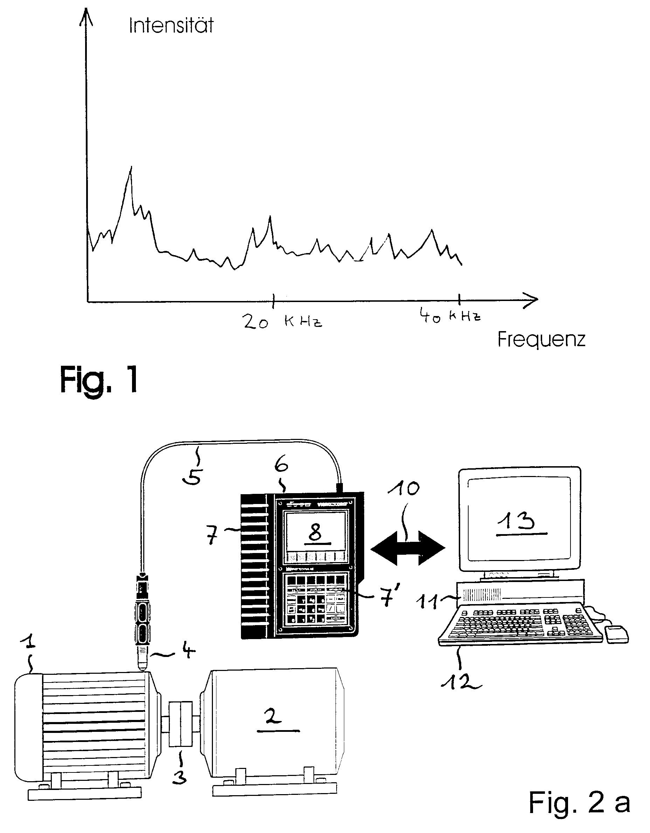

Die in Fig. 1 wiedergegebene Darstellung bezieht sich auf die Tatsache, dass zur Analyse von Schwingungszuständen, wie sie an in Betrieb befindlichen Maschinen bevorzugt auftreten, ein Frequenzbereich von ca. 0 bis 40 000 Hz erfasst werden sollte. Die Analyse höherer Frequenzen ist im allgemeinen nur bei speziellen Fragestellungen und Untersuchungen erforderlich. Um eine Darstellung gemäss Fig. 1 bereitzustellen, wird in an sich bekannter Weise mit einem Sensor, welcher auf Beschleunigungen reagiert, zunächst sukzessive und in geordneter zeitlicher Reihenfolge eine Vielhahl einzelner Beschieunigungssignale erfasst. Hierzu wird in an sich bekannter Weise an einem geeigneten Punkt der Oberfläche einer zu überprüfenden Maschine (wie Motor, Pumpe, Turbine, Werkzeugbearbeitungsmaschine an der Lagerstelle oder einer entsprechenden Subkomponente wie Getriebe ) ein Beschleunigungssensor angesetzt, welcher die mechanischen Beschleunigungssignale in ein elektrisches Signal umwandelt. Ein solches Signal wird sodann mittels eines Analog-Digital-Wandlers in einzelne Abtastwerte konvertiert ( 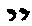 gesampelt"). Es wird bei jedem Messvorgang also eine Mehrzhhl zeitlich nacheinander erfasste einzelne Messignale (Samples) bereitgestellt. Diese Messignale werden zur weiteren und zeitversetzten Auswertung zwischengespeichert. (Bei speziellen Messverfahren kann anstelle dieser beschriebenen, sogenannten einkanaligen auch eine sog. mehrkanalige Messwerterfassung erfolgen. Bei mehrkanaliger Messwerterfassung werden - anstelle eines jeweils einzelnen Messsignals - zu praktisch gleichen Zeitpunkten zwei oder mehr Messignale erfasst, konvertiert und in einem Signaldiagnosegerät zwischengespeichert). Unter Anwendung an sich bekannter mathematischer Methoden werden mittels eines FFT-Algorithmus in einer Auswerteeinheit die spektralen Anteile solcher Körperschallemissionen in einem Folgeschritt errechnet. Ihre Darstellung erfolgt dann zweckmässig auf dessen Sichtteil in einem kartesischen Koordinatensystem mit linear oder logarithmisch geteilter Ordinate und Abszisse.

Je nach betrieblichen Erfordernissen wird die beschriebene Messwerterfasssung mittels mobiler Datenerfassung per Datensammler im turnusmässigem Rhythmus wiederholt, zum Beispiel jeden Monat oder auch halbjährlich. Von einem Analysator oder festinstallierten Überwachungsgerät erfolgt die Messung bei Bedarf oder bei Festinstallierten dauernd.

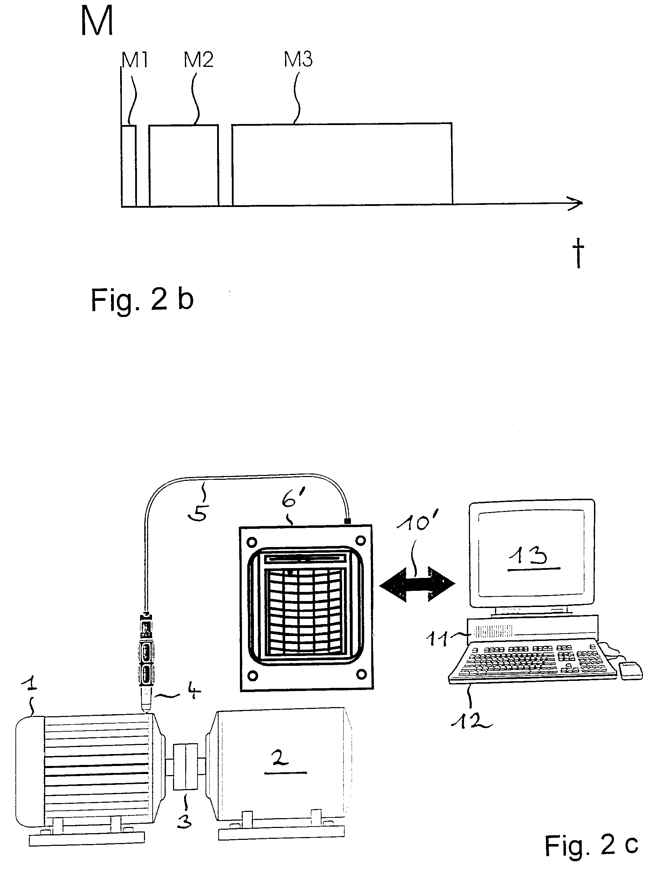

Fig. 2 a zeigt apparative Anordungen, wie sie nach dem erfindungsgemässen Verfahren bevorzugt werden. An eine zu überwachenden Maschine 1, z.B. einen Motor, wird ein Sensor 4, z.B. ein Beschleunigungssensor, zur Messung des Schwingungszustandes der Maschine angesetzt. Der zu ermittelnde Körperschall kann zumindest anteilig auch von einem mitlaufenden weiteren Aggregat 2, wie z.B. einer Pumpe, Kompressor oder dergleichen herrühren und über eine Kupplung 3 übertragen werden. Die vom Sensor 4 erzeugten elektrischen Signale sind also ein Abbild des an einem jeweiligen Messpunkt ermittelten Körperschalls und werden über das Anschlusskabel 5 dem Datensammler 6 zugeführt. Dieser ist typischerweise als tragbares Gerät ausgestaltet, weist z.B. ein erstes (7) und ein zweites Bedienfeld (7') mit Tastaturen sowie ein Sichtteil 8 auf und besitst mit Vorteil mindestens einen Daten-Ausgang (nicht gezeigt). Über den Datenausgang kann der Datensammler 6 mit einer Daten-Auswertestation 11 direkt, gegebenenfalls indirekt, in Verbindung gebracht werden, so dass ein Transfer von Daten aus dem Speicher des Datensammlers in die Auswertestation 11 oder zurück möglich ist. Die Verbindungsmittel (per Kabel oder drahtlos) sind dabei durch den Pfeil mit Bezugsziffer 10 symbolisiert. - Die Datenauswerte-Station 11 ist typischerweise ein handelsüblicher Personal-Computer mit Tastatur 12 und Bildschirm 13 sowie zugehörigem Betriebssystem und weiterer Auswerte-Software. Unter Verwendung geeigneter Kommunikationssoftware und weiterer anwendungsspezifischer Auswerte-Software können die auf dem Datensammler 6 gespeicherten Daten in die Datenauswerte-Station 11 hereingenommen und nach Vorgaben des Bedieners ausgewertet und dargestellt und endgespeichert werden. Alternativ und gegebenenfalls auch zusätzlich kann für den portablen Datensammler 6 auch ein festinstalliertes Überwachungsgerät 6' vorgesehen sein, welches vergleichbare Funktionen wie der Datensammler (ggf. auf automatisierter Basis) durchführen kann. Es kann mittels entsprechender Verbindungsmittel oder drahtloser Datenübertragungs-Strecken, beide durch den Pfeil mit Bezugsziffer 10' symbolisiert, ebenfalls mit der Datenauswerte-Station 11 kommunizieren (Fig 2c).

Die in Fig. 2a gezeigte Anordnung ist in der Lage, Körperschallmessungen sowohl nach dem Stand der Technik als auch gemäss der Erfindung auszuführen. Die erfindungsgemässe Vorgehensweise wird durch Fig. 2b dargestellt, welche den zeitlichen Ablauf für eine Messung an einer einzigen Messposition darstellt. Die Abszisse t bezeichnet die Zeit, während die mit M beschriftete Ordinate anzeigt, ob eine Erfassung und Registrierung einzelner Messignale erfolgt oder nicht.

In einem ersten, relativ kurzen Zeitabschnitt erfolgt durch den Datensammler 6 eine Messung M1. Zu dieser Messung werden die vom Sensor 4 abgegebenen Beschieunigungssignale mit einer ersten Abtastfrequenz einem im Datensammler enthaltenen Tiefpass zugeführt. Die genannte erste Abtastfrequenz ist auf einen relativ hohen Wert voreingestellt oder voreinstellbar. Die tiefpassgefilterten Beschleunigungssignale werden sodann mit relativ hoher Abtastrate (beispielsweise 100 kHz) konvertiert und gespeichert, bis etwa 1000 bis 4000 Abtastwerte im Datensammler 6 abgespeichert sind. Zur Konversion wird zweckmässig ein Analog-Digital-Wandler (ADC) mit einer Auflösung von typisch 12 bis 16 bit vorgesehen.

In Anschluss an die erste Messung M1 erfolgt eine Messung M 2 . Diese ähnelt in ihrem Ablauf der ersten Messung. Es wird jedoch eine andere, nämlich niedrigere Abtastfrequenz eingesetzt, d.h. die Abtastrate ist niedriger. Sie ist bevorzugt um einen Faktor von ca. 10 reduziert und beträgt damit beispielsweise nur noch etwa 10 kHz. Die Anzahl der Abtastwerte ist vergleichbar gross. Aufgrund der niedrigeren Abtastrate dauert die Messung M 2 jedoch entsprechend länger, beispielsweise etwa 10fach länger als Messung M1, um eine gleiche Linienanzahl zu erzeugen.

Im Anschluss an die zweite Messung M 2 erfolgt die Messung M 3. Auch diese ähnelt in ihrem Ablauf der ersten bzw. der zweiten Messung. Es wird jedoch ein Tiefpass mit einer noch niedrigeren Grenzfrequenz eingesetzt. Ausserdem ist auch hier die Abtastrate reduziert und beträgt nur noch etwa 1000 Hz, d.h. sie liegt um einen bevorzugten Faktor von ca. 10 niedriger als bei Messung 2. Die Anzahl der Abtastwerte ist wiederum vergleichbar gross wie bei Messung M1 und M 2. Dementsprechend dauert Messung M 3 wiederum länger als Messung M 2, nämlich etwa 10 mal so lang wie bei M 2, je nach vorgesehener Abtastrate.

Durch die mehrfache Messung und Erfassung von Körperschall in unterschiedlichen Frequenzbereichen ergibt sich im Gegensatz zu herkömmlichen Vibrations- und Geräuschmessungen an Maschinen der grosse wirtschaftliche Vorteil, dass für jede der Messungen eine spektrale Darstellung mit bereichsweiser optimaler und partiell besonders feiner Auflösung errechnet werden kann, wohingegen bei herkömmlichen Messungen die Auflösung in Teilbereichen entweder nicht genügend fein war oder nur mit erheblichem Speicher-Aufwand erzielbar war. Wichtig ist, dass eine mehrfache Messung mit unterschiedlichen Abtastraten vorgenommen wird. Die Reihenfolge, mit der die Abtastraten und gleichzeitig die max. Abtastfrequenzen umgeschaltet werden, ist jedoch beliebig. Der Vorteil des geringeren Speicherplatzbedarfes im Vergleich zu herkömmlichen Verfahren kommt jedoch besonders dann zum Tragen, wenn regelmässig an eine erste Mess-Sequenz (mit mehreren Abtastraten) am selben Messpunkt weitere solcher Mess-Sequenzen durchgeführt werden, so dass in einer späteren Auswertungsphase auch statistische Werte und historische Änderungen ermittelt und dargestellt werden können.

Gemäss der Erfindung wird eine weitere Reduktion des erforderlichen Speicherplatzes im Signaldiagnosegerät dadurch erreicht, dass nur solche Signale erfasst werden, deren Spektralanteile insgesamt oder anteilig ein voreingestelltes unteres Intensitäts-Limit überschreiten. Spektralanteile, deren Pegel nicht ausreichend hoch ist, werden mit einer speziellen Codierung in Kurzform abgespeichert.

Gemäss der Erfindung können erfasste Körperschallsignale auch mittels einer Vorab-Analyse, welche durch ein Signaldiagnosegerät 6 durchgeführt wird, auf interessierende Frequenzbereiche mit signifikanten Frequenzanteilen untersucht werden. Je nach Ergebnis einer solchen Vorab-Analyse werden die Einstell-Parameter (Abtastrate, Grenzfrequenz des vorgeschalteten Tiefpasses) für die oben beschriebenen (und gegebenenfalls weiteren ) Messungen M1, M 2, M 3 automatisch nach Massgabe eines Messeinstellungs - Teilprogramms festgelegt, damit erfolgt die Einstellung der Abtastfrequenzen automatisch ohne Bedienaufwand.

Das Messeinstellungs - Teilprogramm kann dabei ggf. auf Informationen zurückgreifen, die durch eine Identifizierungs-Codierung einzelner Messpunkte festgelegt wird. Das heisst, dass im Verlaufe einer (z.B. mehrere Stunden dauernden) Messrunde Körperschallmessungen an einigen hundert Messpunkten durchgeführt werden, wobei die Festlegung der genannten Parameter unter anderem davon abhängt, an welchem Messpunkt gerade eine aktuelle Messung erfolgt.

Nach Abschluss einer Messrunde werden die Daten über die Verbindungs- oder Datenübertragungsmittel (Bezugszeichen 10) zur Daten-Auswertestation 11 übermittelt, wobei die Länge der Verbindungsstrecke zwischen Signaldiagnosegerät und Daten-Auswertestation bei Verwendung von Modems, Funktelefonen oder ähnlichen Einrichtungen der Telekommunikation nahezu beliebig sein kann.

In einem weiteren Schritt gemäss dem erfindungsgemässen Verfahren ermittelt die Daten-Auswertestation 11 sodann aus der Vielzahl der an sie übertragenen Datensätze individuelle Spektrogramme, Übersichten oder Statistiken und gibt diese über einen Bildschirm oder über einen Drucker aus.

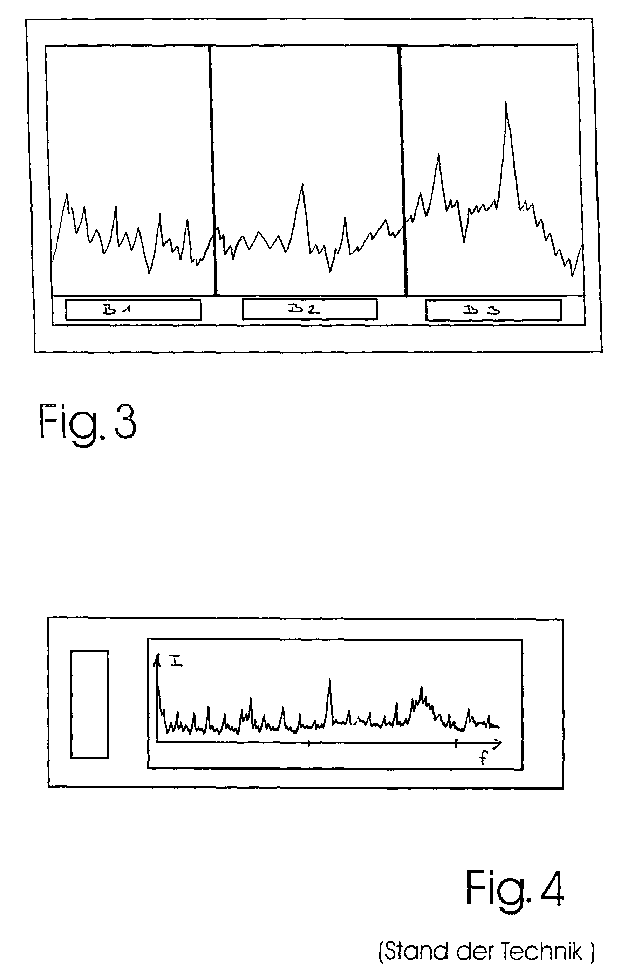

Eine erfindungsgemäss bevorzugte Darstellungsform am Sichtteil eines Datensammlers oder Analysators zeigt Fig. 3, bei der beispielsweise 3 Spektralbereiche B1, B2 und B3 horizontal nebeneinander angeordnet und dargestellt sind. Diese Spektralbereiche sind den Signalen zugeordnet, welche durch unterschiedliche Abtastraten erfasst werden und welche im obigen beispielsweise mit M1, M 2, M 3 bezeichnet worden sind. Es wird gemäss der Erfindung bevorzugt, dass die Spektralbereiche B1 bis B3 ( ggf. weitere) nur diejenigen Informationen wiedergeben, die nicht bereits in einer Darstellung enthalten welche zu einem anderen ebenfalls gezeigten Spektralbereich gehört. Wichtig ist gemäss der Erfindung die konstante Absolut-Schmalbandbreite, d.h. lineare Teilung, innerhalb der einzelnen Bereiche, da ansonsten die häufig auftretenden und zu erkennenden Harmonischen von Grundschwingungen oder deren Seitenbänder verfälscht dargestellt werden. Hierdurch wird die visuelle Interpretation der dargestellten Spektren in B1, B2 und B3 erheblich erleichtert , da. z.B. Seitenbänder, welche zu einer Spektrallinie gehören, wesentlich leichter zu erkennen sind, als wenn eine logarithmische Abszissenteilung verwendet wird. In einer weiteren Ausgestaltung der Erfindung können die in B1, B2 und B3 dargestellten Spektren untereinander auch durch relativ breite Frequenzbereiche voneinander getrennt sein. In einer anderen Ausgestaltung der Erfindung können die jeweils oberen und unteren Frequenzgrenzen, die zu einer Darstellung der Spektren in B1, B2 und B3 gehören, an der Daten-Auswertestation 11 oder am Analysator oder Datensammler durch das Bedienpersonal variiert oder eingestellt werden.

Insgesamt wird durch die beschriebene erfindungsgemässe Vorgehensweise, bei der sich die Datenerfassung auf vorgegebene, fest eingestellte oder automatisch festgelegte Frequenzbereiche beschräkt, viel weniger Speicherplatz in einem speziellen Schwingungsmessgerät 6 benötigt, als wenn eine herkömmliche Darstellung von mehreren Spektrogrammen mit hoher Frequenzauflösung oder mehrere Spektrogramme unterschiedlicher Endfrequenzen angestrebt wird. Eine Darstellung der Spektrogramme mit sehr grosser Linienzahl gemäss dem Stand der Technik (Fig. 4) ist darüber hinaus auch nur dann bedienerfreundlich, wenn ein hochauflösender und damit teurer Bildschirm 13 zum Einsatz kommt. Dieser Nachteil wird durch die vorliegende Erfindung ebenfalls vermieden.

Die Vorteile der erfindungsgemässen Erfassung und Darstellung eines Gesamtspektrums gegenüber den bisherigen Verfahren bestehen darin, dass die zu einer Interpretation durch einen Benutzer erforderliche Frequenzauflösung der Einzelabschnitte sehr günstig ist, weiterhin ergibt sich bei der Benutzung des erfindungsgemässen Verfahrens eine wesentliche Verkürzung der erforderlichen Zeit für eine Messung, besonders hinsichtlich einer vorzunehmenden Messeinstellung, was besonders bei dauerndem oder zyilischem Messen wirksam wird, ferner ist ggf. eine gute Korrelation der einzelnen Einzelabschnitte ersichtlich, was damit Korrelation der Wirkungsursachen bei Interpretation ermöglicht, darüberhinaus ergeben sich aus der übersichtlichen Darstellung und der einfachen Handhabung und Nachverarbeitung nur eines einzigen, konsolidierten Messdatensatzes zusätzliche Vorteile.

## Patentansprüche

1. Verfahren zur Ermittlung und Darstellung von Spektren für gemessene Schwingungssignale, insbesondere für Körperschall-Signale, die von Maschinen mit rotierenden oder schwingenden Komponenten emittiert werden, bei dem mehrere Messignale, einzeln oder als Datensätze, mittels Datenerfassungsmitteln, insbesondere in Form portabler Datensammier, Signalanalysatoren oder festinstallierter Dauerüberwachungsgeräte, an mindestens einer Messposition mit einem Schwingungsaufnehmer an einer Maschine zeitlich nacheinander erfasst und einer Auswerteeinheit in einem Schwingungsmessgerät oder in einer Auswertestation zugeführt werden und mittels der Auswerteeinheit einer Frequenztransformation, speziell einer diskreten Fouriertransformation mit konstanter Absolut-Schmalbandbandbreite unterzogen werden und wobei die Ergebnisse einer solchen Transformation nach Einzelfrequenzen geordnet und nach Betrag, Phase oder komplexwertigen Resultaten wiedergegeben werden,
gekennzeichnet durch
a) die kombinierte Ausführüng folgender Schritte zur Erfassung der genannten Schwingungssignale:
■ In einem ersten Schritt wird eine Anzahl an Schwingungssignalen mit Abtastwerten einzeln oder in paralleler Weise als Datensatz erfasst, verarbeitet und gespeichert, wobei diese Schwingungssignale mit einer ersten vordefinierten Abtastfrequenz für den zu untersuchenden Frequenzbereich aufgenommen werden, so dass für den zu untersuchenden Frequenzbereich eine zugeordnete, für die Interpretation erforderliche Auflösung der Signalkomponenten erzielt wird.
■ In einem mit dem genannten ersten unmittelbar verknüpften zweiten Schritt wird eine Anzahl an Schwingungssignalen mit Abtastwerten einzeln oder in paralleler Weise als Datensatz erfasst, verarbeitet und gespeichert, wobei diese Schwingungssignale mit einer zweiten vordefinierten, anderen Abtastfrequenz für den zu untersuchenden Frequenzbereich aufgenommen werden, die vorzugsweise ein ganzzahliges Vielfache oder Bruchteil der ersten Abtastfrequenz ist, und soweit von der ersten Abtastfrequenz verschieden ist, dass für einen anderen oder darin enthaltenen zu untersuchenden Frequenzbereich eine zugeordnete für die Interpretation erforderliche Auflösung der Signalkomponenten erzielt wird.
■ in einem oder mehreren Folge-Schritten, die mit den vorgenannten Schritten in vordefinierter Weise verküpft sind, wird jeweils wiederum eine Anzahl Schwingungssignale mit Abtastwerten einzeln oder in paralleler Weise als Datensatz erfasst, verarbeitet und gespeichert, wobei diese Schwingungssignale mit einer jeweils weiteren Abtastfrequenz aufgenommen werden, die vorzugsweise ein ganzzahliges Vielfaches oder Bruchteil der vorherigen Abtastfrequenz ist, und soweit von der vorherigen Abtastfrequenz verschieden ist, dass für einen wieder anderen oder wiederum enthaltenen zu untersuchenden Frequenzbereich eine zugeordnete zur Interpretation erforderliche Auflösung der Signalkomponenten erzielt wird.
sowie
b) die zusätzliche Ausführung eines beliebig zeitversetzten Schrittes, in welchem die gespeicherten Messsignale der vorgenannten Einzelschritte einer Frequenz- oder Spektralanalyse unterzogen und zu einem Gesamtfrequenzpektrum kombiniert werden, so dass das Ergebnis der Frequenz- oder Spektralanalyse aller Schritte gespeichert, später ggf. weiterverarbeitet werden kann
und
c) die Frequenzdarstellung der kombinierten Ergebnisse der Einzelschritte über ein Sichtteil oder einen Drucker gleichzeitig und gemeinsam in einem rechtwinkligen Koordinatensystem erfolgen kann, wobei die Abszisse in mehrere den vorgenannten Einzelschritten zugeordneten Einzelabschnitte mit gleichartiger, insbesondere linearer, alternativ logaritmischer, Teilung unterteilt ist und die Einzelabschnitte annähernd gleiche Linienanzhl sowie unterschiedliche Skalenendwerte des Frequenzachsenabschnitts mit unterschiedlichen absoluten Frequenzauflösungen aufweisen.

2. Verfahren nach Anspruch 1, dadurch gekennzeichnet, dass die Ausführung einzelner der genannten ersten, zweiten, dritten oder weiteren Schritte mittels einer Vorabanalyse davon abhängig gemacht wird, ob innerhalb des jeweils einem Schritt zugeordneten Zeitsignales oder Frequenzbereiches eine oder mehrere Signalkomponenten mit einer Signalintensität vertreten sind, welche oberhalb eines bzw. mehrerer vordefinierter Schwellwerte liegen.

3. Verfahren zur Ermittlung und Darstellung von Schwingungssignalen nach einem der vorstehenden Ansprüche, dadurch gekennzeichnet, dass die Frequenzbereiche für mehrere Einzelspektren nach Grösse gestaffelt sind, so dass errechnete Einzelspektren in aneinandergereihter Form oder nebeneinander superponierbar und als Kombination gleichzeitig und als spektrale Gesamtinformation speicherbar, übertragbar und darstellbar sind.

4. Verfahren nach Anspruch 3, bei welchem überlappende spektrale Bereiche der vorgenannten Einzelschritte in der Kombination ausblendbar sind oder weggelassen werden und nicht zur Darstellung mittels eines Sichtgerätes oder eines Druckers oder zur Speicherung gelangen.

5. Verfahren nach einem der Ansprüche 1 bis 4, dadurch gekennzeichnet, dass die genannten Einzelspektren gemeinschaftlich über einen einzigen Mess-Befehl nach Massgabe vordefinierter darin enthaltener Messeinstellungen erfasst und in einem Folgeschritt über einen einzigen Darstellungs-Befehl nach Massgabe vordefinierter darin enthaltenen Darstellungeinstellungen dargestellt werden.

6. Verfahren nach einem der Ansprüche 1 bis 4, dadurch gekennzeichnet, dass die genannten Einzelspektren kombiniert in einem einzigen Datensatz abspeicherbar und zu einem späteren Zeitpunkt in der genannten Form verwendbar sind.

7. Verfahren nach einem der Ansprüche 1 bis 6, dadurch gekennzeichnet, dass in einem vorhergehenden Schritt sowohl für einen höchstfrequenten als auch für mittelfrequente Einzelspektralbereiche eine zugehörige obere Grenzfrequenz und Auflösung mittels einer Tastatur oder mittels einer Cursor-Fuktion auf einer grafischen Oberfläche als Messeinstellung oder Parametervorgabe für einen vorgenannten Messbefehl vorgebbar ist.

8. Verfahren nach einem der Ansprüche 1 bis 7, dadurch gekennzeichnet, dass vorzugsweise drei Spektralbereiche für Maschinenschwingungssignale oder andere Schwingungssignale gemessen und ausgewertet werden, wobei die oberen Grenzfrequenzen der Spektralbereiche im Verhältnis 1:10:100 stehen und diese bevorzugt die Frequenzbereiche 0 bis 400 Hz, 400 Hz bis 4000 Hz beziehungsweise 4000 Hz bis 40 kHz umfassen.

9. Verfahren nach einem der Ansprüche 1 bis 8, dadurch gekennzeichnet, dass die zeitliche Reihenfolge der Abtastung von eirkanalig oder mehrkanalig zu erfassender Schwingungssignale zwecks Berechnung und Darstellung einzelner fouriertransformierter Spektral-Teile nach einem vorgegebenen Muster erfolgt, wobei das Muster eine Reihenfolge oder eine Häufigkeitsverteilung von direkt nacheinander auszumessenden Teil-Frequenzbereichen vorgibt.

10. Verfahren nach Anspruch 8 oder 9, dadurch gekennzeichnet, dass eine mehrfache sukzessive Abtastung der Messignale zur Berechnung einzelner fouriertransformierter Spektren erfolgt und mehrere Einzelspektren eines vorgegebenen Spektralbereiches zu einem gemittelten Spektrum zusammengefasst werden.

11. Verfahren nach Anspruch 1, dadurch gekennzeichnet, dass die jeweiligen Einzelschritte an verschiedenen Messpositionen und Schwingungsaufnehmern, die jeweils dem zu untersuchenden Maschinenteil zugeordnet sind, gleichzeitig oder unmittelbar nacheinander durchgeführt. werden.

12. Vorrichtung zur Ausführung eines Verfahrens, wie in einem der Ansprüche 1 bis 11 genannt.

13. Vorrichtung nach Anspruch 12, gekennzeichnet durch Mittel zur automatischen Erkennung von Frequenzbereichen, welche Frequenzbereiche sich durch eine vordefinierte Verteilung von Signal-Intensitäten auszeichnen.

14. Vorrichtung nach Anspruch 13, mit Mitteln zur Erfassung von Messsignalen, welche den genannten Frequenzbereichen mit vordefinierter Verteilung von Signalintensitäten zuordenbar sind, wobei durch die Mittel eine automatische Einstellung der Grenzfrequenz eines als Tiefpass geschalteten Anti-Alias-Filters sowie entsprechend eine automatische Einstellung der Abtastrate eines Analog-Digltal-Wandlers ausführbar ist.
